(19) Europäisches Patentamt
European Patent Office
Office européen des brevets

(11) **EP 3 219 094 B1**

(12) **FASCICULE DE BREVET EUROPEEN**

(45) Date de publication et mention
de la délivrance du brevet:
**09.01.2019 Bulletin 2019/02**

(21) Numéro de dépôt: **15813895.8**

(22) Date de dépôt: **12.11.2015**

(51) Int Cl.:
*H04N 21/234* (2011.01)    *H04N 21/854* (2011.01)
*H04N 5/253* (2006.01)    *G11B 27/034* (2006.01)
*H04N 5/262* (2006.01)    *H04N 9/11* (2006.01)
*H04N 21/8549* (2011.01)

(86) Numéro de dépôt international:
**PCT/FR2015/053059**

(87) Numéro de publication internationale:
**WO 2016/075413 (19.05.2016 Gazette 2016/20)**

(54) **DISPOSITIF DE GÉNÉRATION DE RUSHES CINÉMATOGRAPHIQUES PAR ANALYSE VIDÉO**

FILM RUSHES-ERZEUGUNGSVORRICHTUNG DURCH VIDEO-ANALYSE

FILM RUSHES GENERATION DEVICE BY VIDEO ANALYSIS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.11.2014 FR 1460957**

(43) Date de publication de la demande:
**20.09.2017 Bulletin 2017/38**

(73) Titulaire: **INRIA - Institut National de Recherche en
Informatique et en Automatique
78150 Le Chesnay (FR)**

(72) Inventeurs:
• **RONFARD, Rémi
38330 Montbonnot-Saint-Martin (FR)**
• **GANDHI, Vineet
Ajmer
Rajasthan 305004 (IN)**
• **GLEICHER, Michael
Madison, Wisconsin 53726 (US)**

(74) Mandataire: **Cabinet Netter
36, avenue Hoche
75008 Paris (FR)**

(56) Documents cités:
**EP-A1- 0 540 403**

**Description**

L'invention concerne le domaine de la production vidéo, et en particulier celui de la réalisation d'un film vidéo à partir d'une ou plusieurs prises de vue.

Dans les méthodes classiques de production de contenu audiovisuel ou cinématographique, plusieurs caméras, chacune pilotée par un ou plusieurs opérateurs sont utilisées pour produire différentes vues d'une scène.

Les flux vidéo résultants, également appelés « rushes » sont ensuite découpés sélectivement en vue de réaliser le montage final. Cela est très compliqué, car il est nécessaire au réalisateur d'expliquer à chaque opérateur quel type de prise il doit réaliser, que chaque opérateur exécute sa prise de vue comme cela lui est instruit, puis enfin que les rushes soient synchronisés entre eux en vue du montage final.

L'ensemble de ces opérations rend la prise de vue et le montage vidéo extrêmement coûteux et complexe à mettre en oeuvre.

Le brevet EP-B1-0 540 403 divulgue un système d'analyse vidéo de montage d'un programme télévisé présentant une succession d'images d'ordre k et comprenant un circuit de mesure de l'évolution temporelle de la composition des images, et d'établissement temporelle de la composition des images et d'établissement d'un signal différence d'image et de paramètres d'activité scénique du programme diffusé pour un groupe d'au moins deux images successives d'ordre k, k-1.

L'invention vient améliorer la situation.

À cet effet, l'invention propose un dispositif de traitement de données vidéo comprenant un stockage recevant des données initiales définissant une prise de vue vidéo, ces données pouvant être traitées pour représenter la prise de vue vidéo sous la forme de données d'images successives. Ce dispositif comprend un détecteur, un cadreur et un solveur, dans lequel :

- le détecteur est agencé pour traiter les données d'images successives afin de détecter dans certaines au moins des images des données de coordonnées de sujet à partir de données d'images définissant un ou plusieurs sujets de rush,
- le cadreur est agencé pour traiter les données d'images successives afin de déterminer des données de cadrage, pour certaines au moins des images, à partir de paramètres de rush désignant au moins un sujet de rush et un format de rush et à partir des données de coordonnées de sujet, les données de cadrage comprenant pour chaque image à laquelle elles sont associées des données définissant un cadre minimal et un cadre maximal contenant l'au moins un sujet de rush désigné par les paramètres de rush, et
- le solveur est agencé pour produire des données de rush de la prise de vue vidéo à partir des données d'images successives, des données de cadrage associées aux images successives, et des paramètres de rush, les données de rush étant choisies parmi une pluralité de suites d'images formées en associant des portions des images successives qui sont contenues dans un cadre plus grand que le cadre minimal et plus petit que le cadre maximal associés pour ce rush à une image donnée, le solveur étant muni d'une fonction qui calcule, pour une suite d'images donnée, une pluralité de valeurs quantifiant le mouvement d'une caméra virtuelle associée à la prise de vue de cette suite d'images, et étant agencé pour choisir comme suite d'images définissant les données de rush celle dont la pluralité de valeurs associées minimise la vitesse et la dérivée de l'accélération de la caméra virtuelle qui leur est associée.

Ce dispositif est particulièrement avantageux car il permet d'obtenir des résultats cinématographiquement similaires aux méthodes existantes à partir d'une unique prise de vue, et sans nécessiter une synchronisation des rushes résultants, puisqu'ils sont issus de la même séquence vidéo.

Dans divers modes de réalisations particuliers, le dispositif peut présenter l'une ou la combinaison de plusieurs des caractéristiques suivantes :

- la fonction dont est muni le solveur calcule en outre une valeur quantifiant la différence entre le déplacement perçu pour chaque sujet désigné par des paramètres de rush dans la suite d'images d'une part et dans les données initiales d'autre part,
- la fonction dont est muni le solveur calcule en outre une valeur quantifiant la différence entre la dérivée du déplacement de chaque sujet désigné par des paramètres de rush dans les données initiales d'une part, et la dérivée du déplacement de la caméra virtuelle d'autre part,
- la fonction dont est muni le solveur calcule en outre une valeur quantifiant, pour chaque image de la suite d'images, la différence entre la taille du cadre minimal et celle du cadre retenu pour cette image dans la suite d'images, ainsi que la différence entre la position du centre du cadre minimal et celle du centre du cadre retenu pour cette image dans la suite d'images,

- la fonction dont est muni le solveur calcule en outre une valeur quantifiant, pour chaque image de la suite d'images, une valeur liée à l'inclusion ou l'exclusion d'un ou plusieurs sujets non désignés dans les paramètres de rush dans la suite d'images,
- pour un sujet donné dans une image donnée, le détecteur analyse les données d'images successives pour détecter des coordonnées latérales extrêmes de ce sujet,
- pour une image donnée d'un rush donné, le cadreur définit le cadre minimal à partir des coordonnées latérales extrêmes de chacun des sujets désignés dans les paramètres de rush de ce rush, et
- le cadreur définit le cadre maximal pour correspondre aux dimensions des images des données initiales.

L'invention concerne également un appareil de prise de vue comprenant un dispositif tel que défini plus haut, agencé pour réaliser une prise de vue sous la forme de données initiales, et pour produire des données de rush à partir de ces données et dudit dispositif.

L'invention concerne également un procédé de traitement de données vidéo comprenant les opérations suivantes :

a) recevoir des données initiales définissant une prise de vue vidéo, ces données pouvant être traitées pour représenter la prise de vue vidéo sous la forme de données d'images successives,

b) déterminer des paramètres de rush désignant au moins un sujet de rush et un format de rush, et des données d'image d'un ou plusieurs sujets de rush,

c) analyser les données d'images successives pour détecter dans certaines au moins des images des données de coordonnées d'un sujet à partir de données d'images définissant un ou plusieurs sujets de rush,

d) traiter les données d'images successives pour déterminer pour certaines au moins des images des données de cadrage à partir des données de coordonnées de sujet et des paramètres de rush, les données de cadrage comprenant pour chaque image à laquelle elles sont associées des données définissant un cadre minimal et un cadre maximal contenant l'au moins un sujet de rush désigné par les paramètres de rush, et

e) définir des données de rush comme une suite d'images formées en associant des portions des images successives, laquelle suite d'images est déterminée en choisissant parmi une pluralité de suites d'images qui sont contenues dans un cadre plus grand que le cadre minimal et plus petit que le cadre maximal associés aux images successives dans les données de cadrage associées à un rush donné, la suite d'images qui minimise la vitesse et la dérivée de l'accélération d'une caméra virtuelle qui est associée à cette suite d'images.

D'autres caractéristiques et avantages de l'invention apparaîtront mieux à la lecture de la description qui suit, tirée d'exemples donnés à titre illustratif et non limitatif, tirés des dessins sur lesquels :

- la figure 1 représente un exemple de réalisation du dispositif selon la revendication 1,
- la figure 2 représente un diagramme de flux d'un exemple de fonctionnement du dispositif de la figure 1,
- la figure 3 représente un diagramme d'un exemple de réalisation d'une opération de la figure 1,
- la figure 4 représente un diagramme d'un exemple de réalisation d'une autre opération de la figure 1, et
- la figure 5 représente un diagramme d'un exemple de réalisation d'une opération de la figure 4.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

En outre, la description détaillée est augmentée de l'annexe A, qui donne la formulation de certaines formules mathématiques mises en oeuvre dans le cadre de l'invention. Cette Annexe est mise à part dans un but de clarification, et pour faciliter les renvois. Elle est partie intégrante de la description, et pourra donc non seulement servir à mieux faire comprendre la présente invention, mais aussi contribuer à sa définition, le cas échéant.

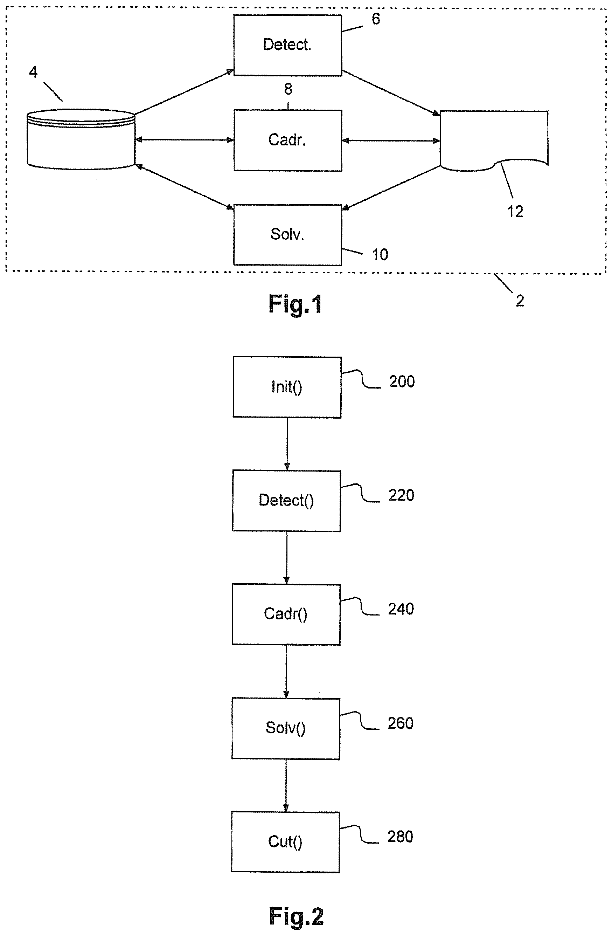

La figure 1 représente un exemple de réalisation du dispositif de traitement de données vidéo 2 selon l'invention.

Le dispositif 2 comprend un stockage 4, un détecteur 6, un cadreur 8 et un solveur 10. Le détecteur 6 et le cadreur 8 produisent des données intermédiaires 12 qui sont utilisées avec les données du stockage 4 par le solveur 10 pour produire des données de rush.

Plus précisément, le stockage 4 comprend des données appelées ci-après données initiales. Les données initiales représentent une prise de vue vidéo, comme par exemple la prise de vue d'un spectacle vivant (pièce de théâtre, opéra, ballet, ou autre). Le stockage 4 reçoit également des paramètres de rush, qui définissent les caractéristiques recherchées pour les rushes qui seront produits par le dispositif 2 à partir des données initiales. Les paramètres de rush peuvent être des données statiques ou des données qui sont redéfinies à chaque fois que le dispositif 2 est utilisé.

Le dispositif 2 permet de traiter les données initiales du stockage 4 pour produire des rushes conformément aux contraintes définies par les paramètres de rush, à partir d'une unique prise de vue. Ainsi, lorsqu'une oeuvre cinématographique ou audiovisuelle présente une vue principale large à partir de laquelle tous les rushes souhaités sont à extraire, le dispositif 2 permet de réaliser la totalité de ces rushes à partir d'une unique prise de vue, avec une seule caméra. De plus, comme les rushes sont tous réalisés à partir d'une unique prise de vue, ils sont intrinsèquement synchronisés, ce qui réduit de manière conséquente le travail de production.

Dans l'exemple décrit ici, les données initiales sont filmées avec une résolution qui est supérieure à la résolution recherchée pour les rushes. Ainsi, en filmant avec une caméra en résolution Ultra HD (également appelée « 4K », c'est-à-dire 4096 par 2160 pixels pour la variante cinématographique, ou 3840 par 2160 pixels pour la variante audiovisuelle), il est possible par interpolation de produire des vidéos au format HD (c'est-à-dire 2048 par 1080 pixels pour la variante cinématographique, ou 1920 par 1080 pixels pour la variante audiovisuelle). Cependant, il est possible d'utiliser toutes les résolutions, y compris une résolution identique pour les données initiales et les données de rush, bien qu'il soit alors nécessaire de procéder à une extrapolation des données de rush à la résolution des données initiales, puisque les données de rushes sont tirées d'un découpage des données initiales.

D'une manière générale, une vidéo est stockée par le biais de données qui décrivent les images successives composant cette vidéo, que ce soit avec ou sans compression. Dans tous les cas, bien qu'il faille distinguer les images composant une vidéo et les données associées à ses images, il conviendra de retenir que le terme « image » désigne à la fois une image en tant qu'instantané d'une vidéo et les données qui lui sont associées.

Dans le cadre de l'invention, le stockage 4 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données intermédiaires 12 peuvent être stockées sur tout type de mémoire similaire au stockage 4, ou sur celui-ci. Ces données peuvent être effacées après que le dispositif 2 ait effectué ses tâches ou conservées.

De même, le dispositif 2 de l'exemple décrit ici comprend trois unités fonctionnelles (le détecteur, le cadreur et le solveur). Ces unités peuvent être réunies au sein d'un même boîtier, sous la forme d'un ou plusieurs processeurs ou circuits intégrés spécialisés pour réaliser les fonctions de ces unités, ou encore sous la forme de code informatique exécuté sur une ou plusieurs machines informatiques reliées entre elles pour la réalisation du dispositif 2, ou sous toute forme intermédiaire entre ces types de réalisation.

La figure 2 représente un diagramme de flux d'un exemple de fonctionnement du dispositif de la figure 1. Comme on peut le voir sur cette figure, le dispositif 2 commence par une opération 200 dans laquelle une fonction Init() est exécutée.

La fonction Init() comprend la désignation des données initiales dans le stockage 4, c'est-à-dire le choix de la vidéo à traiter pour produire automatiquement les rushes, le choix des sujets pouvant faire l'objet d'un rush, ainsi que le choix des paramètres de rush.

Le choix des sujets pouvant faire l'objet d'un rush peut être réalisé manuellement par l'utilisateur, qui va désigner un ou plusieurs acteurs par exemple en l'incluant dans un rectangle dessiné avec un outil tel qu'une souris, ou cette désignation peut être automatisée. Ainsi, la fonction Init() peut exécuter des outils de détection de contours pour détecter les silhouettes humaines dans les données initiales et proposer à un utilisateur de choisir un ou plusieurs objets dans les résultats de cette détection. Selon l'algorithme de détection retenu pour la fonction Detect() décrite plus bas, plusieurs images pourront être nécessaires pour la désignation d'un objet.

Les paramètres de rush incluent pour chaque rush :

- le choix du motif qui va servir de base au rush, c'est-à-dire le ou les objets qui seront l'objet généralement central du rush concerné (en général un ou plusieurs acteurs),
- le choix du format du rush, c'est-à-dire le type de plan recherché. En général, il s'agit d'un plan large, d'un plan moyen ou d'un plan rapproché.

Le choix du motif des paramètres de rush peut également faire l'objet d'une automatisation, ou d'une association manuelle entre d'une part un ou plusieurs indices d'objet et un indice de paramètres de rush.

Selon les variantes de réalisation, les paramètres de rush peuvent être préprogrammés (par exemple, il peut être prévu au moins un plan large comprenant tous les acteurs, un plan rapproché par acteur, etc.), ou être spécifiés par l'utilisateur du dispositif 2 au lancement de la fonction Init().

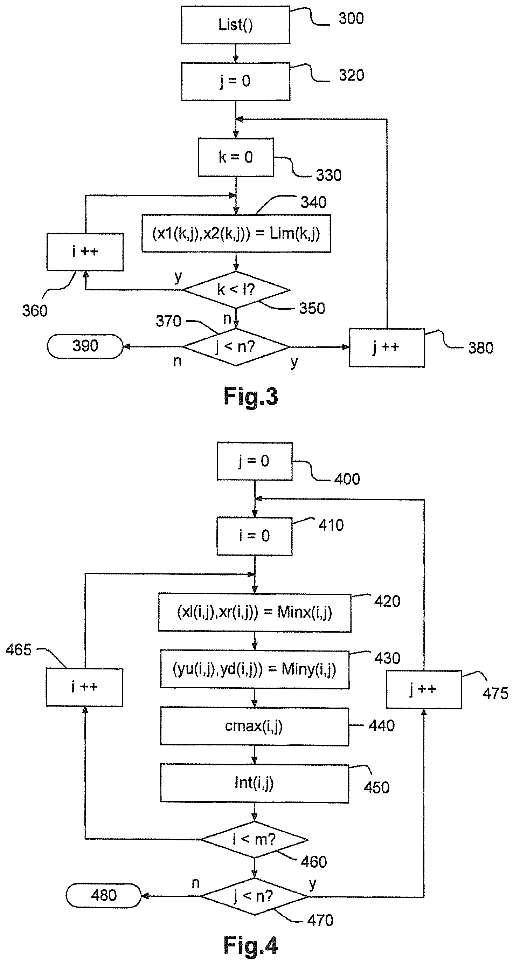

Lorsque les paramètres de rush définissent comme motif un unique sujet, alors on peut parler indifféremment du motif et du sujet pour ce rush. Lorsque des paramètres de rush définissent un motif formé de plusieurs sujets, il est prévu d'associer dans les données intermédiaires 12 correspondantes une liste contenant l'ensemble des autres sujets qui ne font pas l'objet du rush mais qui lui sont très proches, comme décrit avec la figure 4. Cette liste est utile pour l'utilisation de certaines fonctions de l'Annexe A, et pourra être omise dans certaines variantes.

Afin de mieux expliquer le rôle ultérieur du solveur 10, il est utile de préciser le contexte de l'utilisation du dispositif 2. Dans l'exemple décrit ici, le dispositif 2 est utilisé pour produire automatiquement des rushes de spectacles vivants, comme des pièces de théâtre. Dès lors, les sujets qui vont être utilisés pour la réalisation des divers rushes désigneront logiquement des acteurs. Afin de simplifier le traitement, un sujet donné dans une image donnée peut être désigné par des données de coordonnées comprenant un point de référence ainsi qu'une hauteur, la largeur du sujet pouvant être extrapolée à partir de la hauteur. Lorsque des types particuliers de plan de rush sont prévus, comme un plan moyen, des données de hauteur de tronc supérieur peuvent également être utilisées pour caractériser un sujet, en plus des données de coordonnées déjà décrites. Les données de coordonnées peuvent également être définies par un rectangle dans lequel est contenu le motif, à partir de deux bornes en abscisse, et deux bornes en ordonnée. Les différents types de données de coordonnées peuvent être combinés.

La fonction Init() ne forme pas le coeur de l'invention et peut faire appel à divers éléments connus pour permettre la détection automatique de contours, etc. À la fin de l'exécution de la fonction Init(), le dispositif 2 a donc d'une part des données initiales qu'il peut traiter image par image, et des paramètres de rush, qui définissent le format des données vidéos que l'utilisateur cherche à produire à partir des données initiales.

Ensuite, dans une opération 220, le dispositif 2 exécute une fonction Detect() au moyen du détecteur 6. Le détecteur 6, avec la fonction Detect(), a pour rôle de parcourir les images des données initiales et de détecter dans chacune d'elle (ou dans certaines au moins) l'emplacement des sujets pouvant être associés à des motifs dans les paramètres de rush.

La figure 3 représente un exemple de réalisation de la fonction Detect(). La fonction Detect() commence par une opération 300 dans laquelle une fonction List() va créer deux listes : d'une part une liste des sujets à détecter, c'est-à-dire l'ensemble des sujets pouvant être désignés par des paramètres de rush, et d'autre part la liste des images à parcourir, c'est-à-dire la suite des images successives qui composent la vidéo des données initiales.

Ensuite, dans une opération 320, un compteur j est initialisé avec la valeur 0 et une boucle de détection des sujets dans les images successives commence. Dans cette boucle, chaque image successive est analysée dans une boucle qui détermine pour chaque sujet deux bornes entre lesquelles s'exprime chaque sujet.

Pour cela, dans une opération 330, un compteur k de sujet est initialisé à 0. Ensuite, dans une opération 340, une fonction Lim() qui prend comme arguments le compteur courant k de sujet et le compteur courant j d'image détermine deux bornes latérales $x1(k,j)$ et $x2(k,j)$ qui représentent les abscisses extrêmes prises par le sujet d'indice k dans la liste des sujets de l'opération 300, dans l'image j, avec $x1(k,j)<x2(k,j)$. Ces données de coordonnées sont stockées dans les données intermédiaires 12. La fonction Lim() peut utiliser un grand nombre d'algorithmes existants pour détecter les motifs, par exemple celui décrit dans l'article de KALAL Z., MIKOLAJCZYK K., MATAS J. « Tracking-learning-detection. IEEE Transactions on Pattern Analysis and Machine Intelligence 34, 7 (2012)». D'autres algorithmes pourront être retenus.

Il peut arriver que la fonction Lim() échoue à trouver un des sujets. Dans ce cas, un marqueur spécifique indique l'absence du sujet dans les données intermédiaires 12. En variante, les données de coordonnées du sujet dans l'image précédente peuvent être utilisées, ou des données de coordonnées du sujet dans plusieurs images précédentes peuvent être interpolées.

Ensuite, dans une opération 350, l'indice k est testé pour déterminer si tous les sujets de la liste de sujets de l'opération 300 ont été recherchés. Si ce n'est pas le cas, alors l'indice k est incrémenté dans une opération 360, et l'opération 340 est réitérée avec le nouveau sujet.

Une fois que la fonction Lim() a rempli les données intermédiaires 12 avec les données de coordonnées des sujets tirées de la liste de l'opération 300, le compteur j est testé pour voir si la dernière image a été atteinte dans une opération 370. Si ce n'est pas le cas, le compteur j est incrémenté dans une opération 380 et la boucle reprend avec l'opération 330. Sinon l'opération 220 se termine en 390.

Une fois l'opération 220 terminée, une deuxième passe est faite sur les images successives dans une opération 240 avec l'exécution d'une fonction Cadr(). Le principe de la fonction Cadr() est de déterminer dans chaque image successive (si possible), pour chaque motif de rush des paramètres de rush, deux cadres qui représentent les extrêmes du rognage possible pour réaliser le rush concerné dans l'image concernée.

La figure 4 représente un exemple de réalisation de la fonction Cadr(). Cette fonction comporte une double boucle qui va parcourir les images successives dans l'ordre dans lequel elles apparaissent dans la vidéo des données initiales, et associer à chaque rush défini par les paramètres de rush un cadre minimal et un cadre maximal qui pourraient servir de rognage pour réaliser le rush pour le ou les sujets de ce rush.

La fonction Cadr() débute dans une opération 400 avec la mise à 0 d'un compteur j qui sert à parcourir les images successives les unes après les autres (première boucle). Ensuite, la première boucle commence avec la mise à 0 dans une opération 410 d'un compteur i qui sert à parcourir les rushes dans l'image d'indice j courant (deuxième boucle).

La deuxième boucle se poursuit avec le calcul d'un cadre minimal pour le rush d'indice i dans l'image d'indice j. Pour cela, dans une opération 420, une fonction Minx() est exécutée. La fonction Minx() reçoit comme arguments l'indice de rush j et l'indice d'image j.

La fonction Minx() récupère la liste des indices k des sujets qui correspondent au rush i dans les paramètres de rush, ainsi que les données de coordonnées (x1(k,j), x2(k,j)) correspondantes dans les données intermédiaires. Les données xl(i,j) et xr(i,j) correspondent aux coordonnées en x les plus extrêmes parmi les données de coordonnées de tous les sujets k formant le motif du rush d'indice i dans l'image j, avec xl(i,j)<xr(i,j). Ainsi, tous les sujets formant le motif associé au rush d'indice i sont contenus dans l'image j entre les abscisses xl(i,j) et xr(i,j).

Ensuite, dans une opération 430, une fonction Miny() est exécutée. La fonction Miny() reçoit comme arguments l'indice de rush j et l'indice d'image j.

La fonction Miny() récupère la liste des indices de sujets qui correspondent au rush i dans les paramètres de rush, et vient calculer des données de coordonnées yu(i,j) et yd(i,j). Les données de coordonnées yu(i,j) et yd(i,j) correspondent aux coordonnées en y les plus extrêmes parmi les données de coordonnées de tous les sujets k formant le motif du rush d'indice i dans l'image j, en fonction des paramètres de rush, avec yu(i,j) < yd(i,j). Ainsi, tous les sujets formant le motif associé au rush d'indice i sont contenus dans l'image j entre les ordonnées yu(i,j) et yd(i,j). Dans le cas de paramètres de rush indiquant une prise de vue de plein pied, les données de coordonnées yu(i,j) et yd(i,j) peuvent être déterminées de manière automatique par analyse de l'image, par exemple en déterminant l'ordonnée la plus haute, ainsi que l'ordonnée la plus basse pour chaque sujet. Dans le cas de paramètres de rush indiquant une prise de vue de plan moyen ou de plan rapproché, une ordonnée correspondant au sommet du sujet (la tête pour un acteur) peut être déterminée de manière automatique, et des données de hauteur de tronc peuvent être utilisées pour définir l'ordonnée la plus basse du sujet.

Le cadre minimal est défini par le rectangle compris entre xl(i,j) et xr(i,j) d'une part et yu(i,j) et yd(i,j) d'autre part.

Ensuite, dans une opération 440, une fonction cmax(i,j) détermine le cadre maximal pour le rush d'indice i pour l'image j. Dans l'exemple décrit ici, le cadre maximal est défini comme étant égal à celui de la prise de vue des données initiales. En variante, un cadre maximal de dimensions inférieures peut être calculé, par exemple en agrandissant sélectivement le cadre minimal jusqu'à atteindre le bord extrême associé à un sujet présent sur l'image j mais ni désigné par le motif des paramètres de rush du rush d'indice i, ni coupé par le cadre minimal. Cette diminution de la taille du cadre maximal permet de gagner du temps de calcul.

Enfin, dans une opération 450, une fonction Int(), qui prend en tant que variables l'indice de rush i et l'indice d'image j, détermine si l'un des autres sujets présents sur l'image j est partiellement inclus dans le cadre minimal. En effet, selon la variante décrite ici, il est souhaité de produire des rushs qui évitent de « couper » un sujet en deux, même s'il ne fait pas partie du motif du rush en question. Pour cela, la fonction Int() compare les données de coordonnées xl(i, j) et xr(i,j) aux données de coordonnées x1(k,j) et x2(k,j) de tous les sujets indiqués dans les données intermédiaires 12 pour l'image j qui ne sont pas associés au motif des paramètres de rush du rush d'indice i.

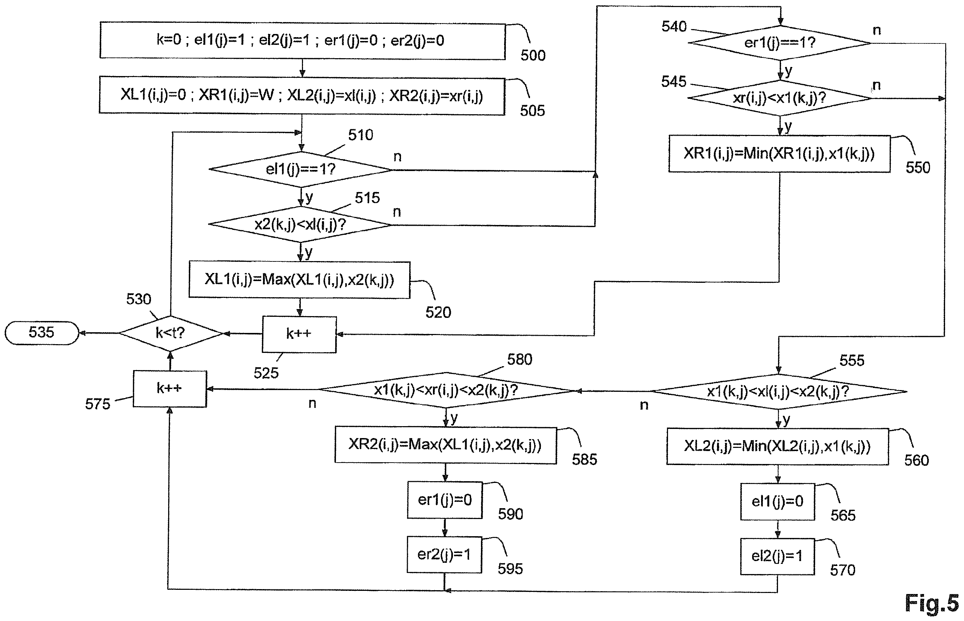

La figure 5 représente un exemple de mise en oeuvre de la fonction Int(). La fonction Int() commence dans une opération 500 par l'initialisation à 0 d'un indice k servant à parcourir les sujets indiqués dans les données intermédiaires 12 pour l'image j qui ne sont pas associés au motif des paramètres de rush du rush d'indice i, d'indices de calcul er1(j) et el1(j) avec la valeur 1, et d'indices de calcul er2(j) et el2(j) avec la valeur 0.

Ensuite, dans une opération 505, des variables de pénalité de contact XL1(j), XRl(j), XL2(j) et XR(j) sont respectivement initialisées avec les valeurs 0, W (la largeur de la prise de vue des données initiales), xl(i,j) et xr(i,j).

Ensuite, dans une opération 510, une série de tests commence. Comme on l'a mentionné plus haut, les indices er1(j) et er2(j) d'une part et el1(j) d'une part et el2(j) d'autre part sont construits pour avoir des valeurs opposées. Cela est dû au fait que la fonction Int() permet de tenir compte des cinq cas possibles tout en conservant une formulation de problème convexe :

- soit un sujet donné est à gauche du cadre minimal, mais risque d'être coupé par un cadre compris entre le cadre minimal et le cadre maximal, et l'on va chercher à favoriser des rushes qui n'incluent pas ce sujet - dès lors, c'est le bord le plus à droite (XL1(j)) de tous les sujets k qui constitue la limite d'intérêt,
- soit un sujet donné est à droite du cadre minimal, mais risque d'être coupé par un cadre compris entre le cadre minimal et le cadre maximal, et l'on va chercher à favoriser des rushes qui n'incluent pas ce sujet - dès lors, c'est le bord le plus à gauche (XRl(j)) de tous les sujets k qui constitue la limite d'intérêt,
- soit un sujet donné est coupé par la partie gauche du cadre minimal, et l'on va chercher à favoriser des rushes qui incluent ce sujet - dès lors, c'est le bord le plus à gauche (XL2(j)) de tous les sujets k qui constitue la limite d'intérêt,
- soit un sujet donné est coupé par la partie droite du cadre minimal, et l'on va chercher à favoriser des rushes qui incluent ce sujet - dès lors, c'est le bord le plus à droite (XR2(j)) de tous les sujets k qui constitue la limite d'intérêt, ou
- soit un sujet est entièrement inclus dans le cadre minimal.

Dans les quatre premiers cas, les positions extrêmes permettent de définir la pénalité maximale, dans le cas où plusieurs sujets seraient dans l'un des quatre cas décrits. Dans le cinquième cas, le sujet, bien que non prévu dans le rush est ignoré, car il sera présent quel que soit le rush calculé.

Cependant, ces cas sont mutuellement exclusifs deux à deux dans le sens où si l'un des sujets est coupé par la partie gauche (respectivement droite) du cadre minimal, alors il n'y plus lieu de chercher à favoriser l'exclusion des sujets situés à gauche (respectivement à droite) du cadre minimal et risquant d'être coupés par un cadre compris entre le cadre minimal et le cadre maximal. En effet, comme le rush calculé doit au moins être inclus dans le cadre minimal, les cas d'exclusion des sujets risquant d'être coupés par un cadre compris entre le cadre minimal et le cadre maximal sont alors intrinsèquement exclus.

Cela est réalisé dans le cadre de l'invention au moyen des formules [60] et [70] de l'Annexe A décrites plus bas, qui traitent respectivement des cas d'exclusion et d'inclusion de sujets, et dans lesquelles les indices de calcul er1(j) et er2(j) d'une part et el1(j) d'une part et el2(j) d'autre part sont construits pour avoir des valeurs opposées afin de tenir compte de ce qui précède.

Dans l'opération 510, l'indice de calcul er1(j) est comparé à la valeur 1, pour savoir s'il est encore pertinent de chercher à exclure des sujets. Si c'est le cas, alors dans une opération 515, un test détermine si le sujet d'indice k est situé à gauche du cadre minimal. Si c'est le cas, alors dans une opération 520, la valeur extrême d'exclusion par la gauche pour l'image j, XL1(j), est mise à jour en déterminant le maximum entre la valeur XL1(j) courante et la valeur x2(k,j), c'est-à-dire le bord droit du sujet d'indice k courant. Ensuite, l'indice k est incrémenté dans une opération 525 et un test détermine dans une opération 530 si tous les sujets indiqués dans les données intermédiaires 12 pour l'image j qui ne sont pas associés au motif des paramètres de rush du rush d'indice i ont été parcourus. Si c'est le cas, alors la fonction Int() se termine en 535. Sinon, elle reprend avec le test de l'opération 510.

Lorsque le test de l'opération 510 ou celui de l'opération 515 est négatif, la fonction Int() teste si le sujet d'indice k courant est à droite du cadre minimal. Pour cela, dans une opération 540, un test détermine si les exclusions de sujets par la droite sont toujours pertinentes. Si c'est le cas, alors dans une opération 545, un test détermine si le sujet d'indice k est situé à droite du cadre minimal. Si c'est le cas, alors dans une opération 550, la valeur extrême d'exclusion par la droite pour l'image j, XRI(j), est mise à jour en déterminant le minimum entre la valeur XR1(j) courante et la valeur x1(k, j), c'est-à-dire le bord gauche du sujet d'indice k courant. Ensuite, la fonction Int() se poursuit avec l'incrémentation de l'indice k courant avec l'opération 525 et le test de fin de fonction.

Lorsque le test de l'opération 540 ou celui de l'opération 545 est négatif, la fonction Int() teste si le sujet d'indice k courant est coupé par la partie gauche du cadre minimal. Pour cela, un test détermine dans une opération 555 si xl(i, j) est compris entre les données de coordonnées xl(j,k) et x2(j,k) du sujet d'indice k. Si c'est le cas, alors dans une opération 560, la valeur extrême d'inclusion par la gauche pour l'image j, XL2(j), est mise à jour en déterminant le minimum entre la valeur XL2(j) courante et la valeur x1(k,j), c'est-à-dire le bord gauche du sujet d'indice k courant. Ensuite les indices de calcul el1(j) et el2(j) sont mis à jour dans des opérations 565 et 570 pour tenir compte du fait que les exclusions par la gauche ne sont plus pertinentes. Enfin, la fonction Int() se poursuit avec l'incrémentation de l'indice k courant dans une opération 575 et le test de fin de fonction.

Lorsque le test de l'opération 555 est négatif, la fonction Int() teste si le sujet d'indice k courant est coupé par la partie droite du cadre minimal. Pour cela, un test détermine dans une opération 580 si xr(i,j) est compris entre les données de coordonnées xl(j,k) et x2(j,k) du sujet d'indice k. Si c'est le cas, alors dans une opération 585, la valeur extrême d'inclusion par la droite pour l'image j, XR2(j), est mise à jour en déterminant le maximum entre la valeur XR2(j) courante et la valeur x2(k,j), c'est-à-dire le bord gauche du sujet d'indice k courant. Ensuite les indices de calcul er1(j) et er2(j) sont mis à jour dans des opérations 590 et 595 pour tenir compte du fait que les exclusions par la droite ne sont plus pertinentes. Enfin, la fonction Int() se poursuit avec l'incrémentation de l'indice k courant dans une opération 575 et le test de fin de fonction.

L'ensemble des données calculées aux opérations 420 à 450 est alors stocké dans les données intermédiaires 12.

Enfin, la deuxième boucle est réitérée par un test dans une opération 460, avec incrémentation de l'indice de rush i si nécessaire dans une opération 465, et reprise de la deuxième boucle avec le sujet d'indice i+1 dans l'opération 410.

Lorsque les cadres de tous les motifs de rush ont été déterminés pour une image j, la première boucle est réitérée par un test dans une opération 470, avec incrémentation de l'indice de rush i si nécessaire dans une opération 475, et reprise de la deuxième boucle avec le sujet d'indice i égal à 0 dans l'opération 405.

Lorsque la dernière image a été traitée, la fonction Cadr() se termine dans une opération 480.

Une fois l'opération 240 terminée, le solveur 10 est appelé dans une opération 260 pour exécuter une fonction Solv(). La fonction Solv() a pour rôle de déterminer, pour chaque rush défini dans les paramètres de rush, un cadre pour chaque image qui soit plus grand que le cadre minimal et plus petit que le cadre maximal associés au sujet du rush dans chaque image successive. Pour cela, la fonction optimise un problème qui consiste à associer à chaque cadre possible dans une image donnée une fonction de coût qui prend en compte diverses règles.

Les règles dont doit tenir compte la fonction Solv() sont que le cadre doit être compris entre le cadre minimal et le cadre maximal pour chaque image.

La fonction Solv() peut mettre en oeuvre plusieurs fonctions de coût qui permettent de caractériser le mouvement d'une caméra virtuelle qui aurait réalisé la prise de vue associée à un cadre dans les images successives.

Parmi ces fonctions de coût :

- une fonction qui est associée à l'uniformisation de la taille des motifs dans les rushes, par la formule [10] de l'Annexe A,
- une fonction qui est associée à l'uniformisation de la taille des motifs dans les rushes, mais adaptée pour les motifs aux extrémités de la prise de vue, par la formule [11] de l'Annexe A,
- une fonction qui est associée à la vitesse de la caméra virtuelle, par la formule [20] de l'Annexe A,
- une fonction qui est associée à la dérivée de l'accélération de la caméra virtuelle, par la formule [30] de l'Annexe A,
- une fonction qui est associée à la synchronisation du mouvement de la caméra virtuelle et du mouvement d'un sujet d'un rush, par les formules [40] et [50] de l'Annexe A,
- une fonction qui est associée à la proximité d'un sujet non concerné par le rush dans le cadre d'une image donnée, par la formule [60] de l'Annexe A,
- une fonction qui est associée à l'ajout d'un sujet non concerné par le rush dans le cadre d'une image donnée, par la formule [70] de l'Annexe A.

La formule [10] compare pour chaque image j la différence quadratique de taille entre le centre de rush calculé $(x(j), y(j))$ et le centre du cadre minimal $(X(j), Y(j))$, ainsi qu'entre la taille du rush calculé $(s(j))$ et la taille du cadre minimal $(S(j))$. Cette formule a donc pour conséquence de favoriser la définition d'un rush dans lequel les acteurs présentent une taille similaire à celle du cadre minimal et sont centrés dans celui-ci.

La formule [11] est une variante de la formule [10] dans laquelle un terme supplémentaire est ajouté à $x(j)$, uniquement pour les rushes dont le motif concerne un sujet qui est aux extrémités de la scène (par la variable $d(i)$). Ce terme supplémentaire permet d'éviter de centrer l'acteur le plus à gauche ou l'acteur le plus à droite dans un rush qui le concerne, mais au contraire de favoriser une prise de vue dans laquelle cet acteur a une position en x qui reflète sa position dans la prise de vue principale (c'est-à-dire celle des données initiales).

La formule [20] compare image par image la position du centre du rush calculé, ainsi que la variation de taille du centre du rush calculé, en norme L1. Il s'agit donc de l'équivalent de la dérivée du mouvement et du zoom d'une caméra virtuelle qui prendrait une prise de vue correspondant au rush calculé. La minimisation de cette formule revient à favoriser un rush correspondant à une prise de vue le plus statique possible.

Similairement, la formule [30] compare image par image la dérivée de l'accélération du mouvement et du zoom de la même caméra virtuelle, également connue sous le terme de «jitter» en anglais. La minimisation de cette formule revient à favoriser un rush correspondant à une prise de vue sans tremblements.

La formule [40] est similaire à la formule [20], sauf en ce que chaque terme dépend d'une variable $c_x$, $c_y$ ou $c_s$ qui vaut 1 si le sujet est considéré comme immobile dans la prise de vue des données initiales et 0 sinon. Ainsi, si un sujet est immobile dans la prive de vue principale, les rushes qui seront favorisés seront ceux dans lequel ce même sujet est immobile.

La formule [50] suit un principe proche de celui de la formule [40], c'est-à-dire qu'elle vise à préserver la cohérence entre la vitesse de déplacement de la caméra virtuelle $(x, y, s)$ et la dérivée du déplacement du ou des sujets d'un rush $(a_x, a_y, a_s)$ dans la prise de vue principale. Les termes de cette formule sont nuls si le déplacement du ou des sujets dans le rush est dans la même direction que celle de ce même sujet dans la prise de vue principale, et positive sinon. Ainsi, la minimalisation de la formule [50] permet de préserver la cohérence du sens du mouvement des sujets dans la prise de vue principale et dans les rushes calculés.

La formule [60] et la formule [70] ont été introduites plus haut en référence à la fonction Int() de la figure 4. Ces formules comprennent chacune deux termes qui sont mutuellement exclusifs : si l'un des termes de la formule [60] est positif, alors un des termes de la formule [70] est nul et inversement. Comme on l'a mentionné plus haut, ces formules visent à favoriser l'exclusion des sujets non inclus dans un rush mais susceptibles d'être coupés par un rush trop large, ou au contraire à favoriser l'inclusion de sujets qui sont coupés par une partie du cadre minimal, et qui ne peuvent être exclus, puisque le cadre du rush ne peut être inférieur au cadre minimal. Dans ces formules, le terme R désigne le rapport largeur sur hauteur de la prise de vue principale (« aspect ratio » en anglais), qui, combiné avec la hauteur du cadre de rush $s(j)$, définit la quantité du rush calculé qui peut couper un sujet non inclus dans le motif des paramètres de rush.

Si les formules [60] et [70] de l'Annexe A ne sont pas utilisées dans la fonction mise en oeuvre par le solveur, alors l'opération 450 peut être omise. Dans l'exemple décrit ici, les formules [60] et [70] constituent une unique pénalité pour tous les sujets qui ne font pas partie du motif du rush concerné. Ainsi, les termes $el1(j)$, $el2(j)$, $er1(j)$, $er2(j)$, $XL1(j)$, $XL2(j)$, $XR1(j)$ et $XR2(j)$ sont calculés pour chaque image, pour tous les sujets concernés par cette image. En variante, ces formules pourraient être individualisées sujet par sujet pour chaque image, les termes $el1(j)$, $el2(j)$, $er1(j)$, $er2(j)$, $XL1(j)$, $XL2(j)$, $XR1(j)$ et $XR2(j)$ devenant alors également dépendants de k, moyennant une adaptation de la fonction Int() de la figure 5.

Une combinaison linéaire de ces fonctions de coûts, prises en combinaison avec les règles décrites plus haut définissent ensemble un problème convexe, qui peut être résolu par un calculateur spécialisé, comme CVX (logiciel de résolution des problèmes convexes accessible à l'adresse http://cvxr.com/cvx). D'autres calculateurs pourront être utilisés en variante.

La fonction Solv() a pour rôle de déterminer, pour chaque indice de rush donné, un cadre dans chaque image successive, de sorte que les paramètres de cette suite de cadres minimisent une fonction d'énergie associant au moins deux des fonctions de coûts décrites ci-dessus.

Dans l'exemple décrit ici, la fonction de coût associe les deux premières fonctions de coûts. En variante, la fonction d'énergie peut associer une ou plusieurs des autres fonctions de coûts, et les valeurs de chaque fonction de coût peuvent être pondérées.

Une fois que le solveur a déterminé la suite de cadres de chaque image successive pour chaque rush, l'opération 260 est terminée, et le dispositif exécute la préparation de chaque rush dans une opération 280 par une fonction Cut() qui procède au rognage de chaque image successive conformément au cadre déterminé à l'opération 260. Lorsque les cadres rognés présentent des dimensions différentes, ceux-ci peuvent être mis à l'échelle par interpolation ou extrapolation à la dimension souhaitée pour le rush dans les paramètres de rush.

En variante, les calculs mis en oeuvre par le solveur peuvent être réalisés par une plateforme de calcul dédiée.

De nombreuses variantes peuvent être mises en oeuvre à partir de ce qui précède. Ainsi, un rush peut être découpé en plusieurs segments, présentant chacun des motifs distincts. Cela peut permettre par exemple de suivre des personnages qui rentrent et qui sortent au cours d'une scène ou entre deux scènes.

De plus les données initiales peuvent être couplées avec d'autres données initiales d'une prise de vue selon un autre angle dès lors que les deux prises de vue sont synchronisées. Il s'agit alors de minimiser deux problèmes convexes simultanés.

En outre, d'autres formules peuvent être envisagées pour définir d'autres types de rush. En effet, les formules décrites ci-dessus permettent de réaliser des rushs adaptés à des rushes de type « pan with ». En rigidifiant la formule [10] pour qu'elle ne dépende plus de j, et en ne retenant que les formules [60] et [70], il devient par exemple possible de réaliser des rushes dits « locked with » le motif de rush choisi, c'est-à-dire un plan fixe qui contient les sujets désignés. Ou encore, en faisant varier les formules d'optimisation dans le temps, on peut réaliser un « pan to » pour faire une transition d'un type de plan vers un autre.

Ainsi, en combinant plusieurs prises de vues, plusieurs définitions de rush et en segmentant de manière appropriée les séquences, le montage entier d'une production peut être réalisé de manière automatique. Le dispositif décrit ici peut également être utilisé avec des prises de vue tirées d'animations en 3 dimensions.

D'une manière générale, le dispositif décrit ici peut être dissocié des appareils de prise de vue ou intégrés à ceux-ci. Il devient alors possible de filmer une prise de vue et d'en tirer les rushes presque immédiatement, ce qui permet d'accélérer le travail de production en donnant au réalisateur une idée précise de ce qu'il pourra tirer de chaque prise, et donc d'éviter les reprises inutiles.

De plus, les rushes produits peuvent être enrichis avec des métadonnées décrivant la composition de chaque rush et les mouvements de la caméra virtuelle correspondante. Ensuite, ces rushs enrichis pourront être montés de manière automatique.

ANNEXE A

$$[10]$$

$$D(x, y, s) = \frac{1}{2} \sum_{j=1}^{n} (x(j) - X(j))^2 + (y(j) - Y(j))^2 + (s(j) - S(j))^2$$

$$[11]$$

$$D(x, y, s, i) = \frac{1}{2} \sum_{j=1}^{n} (x(j) + 0.17 * d(i) * R * s(j) - X(j))^2$$
$$+ (y(j) - Y(j))^2 + (s(j) - S(j))^2$$

[20]

$$L11(x,y,s) = \sum_{j=0}^{n-1}(|x(j+1) - x(j)| + |y(j+1) - y(j)| + |s(j+1) - s(j)|)$$

[30]

$$L13(x,y,s) = \sum_{j=0}^{n-3}(|x(j+3) - 3x(j+2) - 3x(j+1) - x(j)|$$
$$+ |y(j+3) - 3y(j+2) - 3y(j+1) - y(j)| +$$
$$* |s(j+3) - 3s(j+2) - 3s(j+1) - s(j)|)$$

[40]

$$M1(x,y,s) = \sum_{k}\sum_{j=0}^{n-1} cx(j,k)(|x(j+1) - x(j)| + cy(j,k)|y(j+1) - y(j)|$$
$$+ cs(j,k)|s(j+1) - s(j)|)$$

[50]

$$M2(x,y,s) = \sum_{k}\sum_{j=0}^{n-1} max\left(0, -ax(\dot{j},k) * \left(ax(\dot{j},k) - x(\dot{j})\right)\right)$$
$$+ max\left(0, -ay(\dot{j},k) * \left(ay(\dot{j},k) - y(\dot{j})\right)\right)$$
$$+ max\left(0, -as(\dot{j},k) * \left(as(\dot{j},k) - s(\dot{j})\right)\right)$$

[60]

$$E1(x,y,s) = \sum_{k}\sum_{j=0}^{n-1} el1(j) * max\left(0, XL1(j) - x(j) + R * s(j)\right) + er1(j)$$
$$* max\left(0, x(j) + R * s(j) - XR1(j)\right)$$

[70]

$$E2(x,y,s) = \sum_{k} \sum_{j=0}^{n-1} el2(j) * max(0, XL2(j) - x(j) + R * s(j)) + er2(j)$$

$$* max\big(0, x(j) + R * s(j) - XR2(j)\big)$$

**Revendications**

1.  Dispositif de traitement de données vidéo comprenant un stockage (4) recevant des données initiales définissant une prise de vue vidéo, ces données pouvant être traitées pour représenter la prise de vue vidéo sous la forme de données d'images successives, **caractérisé en ce qu'**il comprend un détecteur (6), un cadreur (8) et un solveur (10), dans lequel

    - le détecteur (6) est agencé pour traiter les données d'images successives afin de détecter dans certaines au moins des images des données de coordonnées de sujet à partir de données d'images définissant un ou plusieurs sujets de rush,
    - le cadreur (8) est agencé pour traiter les données d'images successives afin de déterminer des données de cadrage, pour certaines au moins des images, à partir de paramètres de rush désignant au moins un sujet de rush et un format de rush et à partir des données de coordonnées de sujet, les données de cadrage comprenant pour chaque image à laquelle elles sont associées des données définissant un cadre minimal et un cadre maximal contenant l'au moins un sujet de rush désigné par les paramètres de rush, et
    - le solveur (10) est agencé pour produire des données de rush de la prise de vue vidéo à partir des données d'images successives, des données de cadrage associées aux images successives, et des paramètres de rush, les données de rush étant choisies parmi une pluralité de suites d'images formées en associant des portions des images successives qui sont contenues dans un cadre plus grand que le cadre minimal et plus petit que le cadre maximal associés pour ce rush à une image donnée, le solveur étant muni d'une fonction qui calcule, pour une suite d'images donnée, une pluralité de valeurs quantifiant le mouvement d'une caméra virtuelle associée à la prise de vue de cette suite d'images,

    **caractérisé en ce que** le solveur est agencé pour choisir comme suite d'images définissant les données de rush celle dont la pluralité de valeurs associées minimise la vitesse et la dérivée de l'accélération de la caméra virtuelle qui leur est associée.

2.  Dispositif selon la revendication 1, dans lequel la fonction dont est muni le solveur calcule en outre une valeur quantifiant la différence entre le déplacement perçu pour chaque sujet désigné par des paramètres de rush dans la suite d'images d'une part et dans les données initiales d'autre part.

3.  Dispositif selon la revendication 1 ou 2, dans lequel la fonction dont est muni le solveur calcule en outre une valeur quantifiant la différence entre la dérivée du déplacement de chaque sujet désigné par des paramètres de rush dans les données initiales d'une part, et la dérivée du déplacement de la caméra virtuelle d'autre part.

4.  Dispositif selon l'une des revendications précédentes, dans lequel la fonction dont est muni le solveur calcule en outre une valeur quantifiant, pour chaque image de la suite d'images, la différence entre la taille du cadre minimal et celle du cadre retenu pour cette image dans la suite d'images, ainsi que la différence entre la position du centre du cadre minimal et celle du centre du cadre retenu pour cette image dans la suite d'images.

5.  Dispositif selon l'une des revendications précédentes, dans lequel la fonction dont est muni le solveur calcule en outre une valeur quantifiant, pour chaque image de la suite d'images, une valeur liée à l'inclusion ou l'exclusion d'un ou plusieurs sujets non désignés dans les paramètres de rush dans la suite d'images.

6.  Dispositif selon l'une des revendications précédentes, dans lequel, pour un sujet donné dans une image donnée, le détecteur (6) analyse les données d'images successives pour détecter des coordonnées latérales extrêmes de ce sujet.

7. Dispositif selon la revendication 6, dans lequel, pour une image donnée d'un rush donné, le cadreur (8) définit le cadre minimal à partir des coordonnées latérales extrêmes de chacun des sujets désignés dans les paramètres de rush de ce rush.

8. Dispositif selon l'une des revendications précédentes, dans lequel le cadreur (8) définit le cadre maximal pour correspondre aux dimensions des images des données initiales.

9. Appareil de prise de vue, **caractérisé en ce qu'**il comprend un dispositif selon l'une des revendications précédentes, et **en ce qu'**il est agencé pour réaliser une prise de vue sous la forme de données initiales, et pour produire des données de rush à partir de ces données et du dispositif selon l'une des revendications précédentes.

10. Procédé de traitement de données vidéo comprenant les opérations suivantes :

a) recevoir des données initiales définissant une prise de vue vidéo, ces données pouvant être traitées pour représenter la prise de vue vidéo sous la forme de données d'images successives,
b) déterminer des paramètres de rush désignant au moins un sujet de rush et un format de rush, et des données d'image d'un ou plusieurs sujets de rush,
c) analyser les données d'images successives pour détecter dans certaines au moins des images des données de coordonnées d'un sujet à partir de données d'images définissant un ou plusieurs sujets de rush,
d) traiter les données d'images successives pour déterminer pour certaines au moins des images des données de cadrage à partir des données de coordonnées de sujet et des paramètres de rush, les données de cadrage comprenant pour chaque image à laquelle elles sont associées des données définissant un cadre minimal et un cadre maximal contenant l'au moins un sujet de rush désigné par les paramètres de rush, et
e) définir des données de rush comme une suite d'images formées en associant des portions des images successives, laquelle suite d'images est déterminée en choisissant parmi une pluralité de suites d'images qui sont contenues dans un cadre plus grand que le cadre minimal et plus petit que le cadre maximal associés aux images successives dans les données de cadrage associées à un rush donné, la suite d'images qui minimise la vitesse et la dérivée de l'accélération d'une caméra virtuelle qui est associée à cette suite d'images.


## Patentansprüche

1. Videodatenverarbeitungsgerät, umfassend einen Speicher (4) zum Empfangen von Ausgangsdaten, die eine Videoaufnahme definieren, wobei diese Daten verarbeitet werden können, um die Videoaufnahme in Form aufeinanderfolgender Bilddaten darzustellen, **dadurch gekennzeichnet, dass** es einen Detektor (6), einen Bildeinsteller (8) und einen Solver (10) umfasst, wobei

- der Detektor (6) dafür eingerichtet ist, die aufeinanderfolgenden Bilddaten zu verarbeiten, um zumindest in bestimmten Bildern Objektkoordinatendaten anhand von Bilddaten zu erfassen, die ein oder mehrere Rohclip-Objekte definieren,
- der Bildeinsteller (8) dafür eingerichtet ist, die aufeinanderfolgenden Bilddaten zu verarbeiten, um zumindest für bestimmte Bilder Bildeinstellungsdaten anhand von Rohclip-Parametern zu bestimmen, die mindestens ein Rohclip-Objekt und ein Rohclip-Format festlegen, sowie anhand der Objektkoordinatendaten, wobei die Bildeinstellungsdaten für jedes Bild, dem sie zugeordnet sind, Daten umfassen, die einen minimalen Rahmen und einen maximalen Rahmen, umfassend das mindestens eine durch die Rohclip-Parameter bestimmte Rohclip-Objekt, definieren, und
- der Solver (10) dafür eingerichtet ist, Rohclip-Daten der Videoaufnahme anhand der aufeinanderfolgenden Bilddaten, anhand der mit den aufeinanderfolgenden Bildern verbundenen Bildeinstellungsdaten und anhand der Rohclip-Parameter zu erzeugen, wobei die Rohclip-Daten ausgewählt werden unter einer Vielzahl von Bildfolgen, die gebildet werden, indem Teile der aufeinanderfolgenden Bilder, die in einem Rahmen enthalten sind, der größer als der minimale Rahmen und kleiner als der maximale Rahmen ist, assoziiert für diesen Rohclip, einem gegebenen Bild zugeordnet werden, wobei der Solver für eine Funktion vorgesehen ist, die für eine gegebene Bildfolge eine Vielzahl von Werten berechnet, die die Bewegung einer virtuellen Kamera quantifizieren, die mit der Aufnahme dieser Bildfolge verbunden ist,

**dadurch gekennzeichnet, dass** der Solver dafür eingerichtet ist, als Folge von Bildern, die die Rohclip-Daten definieren, diejenige auszuwählen, deren Vielzahl zugehöriger Werte die Geschwindigkeit und die Ableitung der Beschleunigung der virtuellen Kamera, die mit ihnen assoziiert ist, minimiert.

2. Vorrichtung nach Anspruch 1, wobei der die Funktion, für die der Solver vorgesehen ist, außerdem einen Wert berechnet, der die Differenz quantifiziert zwischen dem erfassten Versatz für jedes Objekt, bestimmt durch Rohclip-Parameter in der Bildfolge einerseits und in den Ausgangsdaten andererseits.

3. Vorrichtung nach Anspruch 1 oder 2, wobei der die Funktion, für die der Solver vorgesehen ist, außerdem einen Wert berechnet, der die Differenz quantifiziert zwischen der Ableitung des Versatzes jedes Objekts, bestimmt durch Rohclip-Parameter in den Ausgangsdaten einerseits, und der Ableitung des Versatzes der virtuellen Kamera andererseits.

4. Vorrichtung nach einem der vorhergehenden Ansprüche, wobei der die Funktion, für die der Solver vorgesehen ist, außerdem einen Wert berechnet, der für jedes Bild der Bildfolge die Differenz zwischen der Größe des minimalen Rahmens und der des für dieses Bild in der Bildfolge verwendeten Rahmens sowie die Differenz zwischen der Position des Mittelpunkts des minimalen Rahmens und der des Mittelpunkts des für dieses Bild in der Bildfolge verwendeten Rahmens quantifiziert.

5. Vorrichtung nach einem der vorhergehenden Ansprüche, wobei der die Funktion, für die der Solver vorgesehen ist, außerdem einen Wert berechnet, der für jedes Bild der Bildfolge einen Wert quantifiziert, der mit dem Einschluss oder Ausschluss eines oder mehrerer Objekte verbunden ist, die in den Rohclip-Parametern in der Bildfolge nicht festgelegt sind.

6. Vorrichtung nach einem der vorhergehenden Ansprüche, wobei der der Detektor (6) für ein gegebenes Objekt in einem gegebenen Bild die aufeinanderfolgenden Bilddaten analysiert, um extreme seitliche Koordinaten dieses Objekts zu erfassen.

7. Vorrichtung nach Anspruch 6, wobei der der Bildeinsteller (8) für ein gegebenes Bild eines gegebenen Rohclips den minimalen Rahmen anhand der extremen seitlichen Koordinaten jedes der Objekte definiert, die in den Rohclip-Parametern dieses Rohclips festgelegt sind.

8. Vorrichtung nach einem der vorhergehenden Ansprüche, wobei der der Bildeinsteller (8) den maximalen Rahmen entsprechend den Abmessungen der Bilder der Ausgangsdaten definiert.

9. Videoaufnahmegerät, **dadurch gekennzeichnet, dass** es eine Vorrichtung nach einem der vorhergehenden Ansprüche umfasst und **dass** es dafür eingerichtet ist, eine Bildaufnahme in Form von Ausgangsdaten vorzunehmen und Rohclip-Daten mittels dieser Daten und der Vorrichtung nach einem der vorhergehenden Ansprüche zu erzeugen.

10. Videodatenverarbeitungsverfahren, umfassend die folgenden Vorgänge:

   a) Empfangen von Ausgangsdaten, die eine Videoaufnahme definieren, wobei diese Daten so verarbeitet werden können, dass sie die Videoaufnahme in Form aufeinanderfolgender Bilddaten darstellen,
   b) Bestimmen von Rohclip-Parametern, die mindestens ein Rohclip-Objekt und ein Rohclip-Format festlegen, und der Bilddaten eines oder mehrerer Rohclip-Objekte,
   c) Analysieren der aufeinanderfolgenden Bilddaten, um zumindest in bestimmten Bildern Koordinatendaten eines Objekts anhand von Bilddaten zu erfassen, die ein oder mehrere Rohclip-Objekte definieren,
   d) Verarbeiten der aufeinanderfolgenden Bilddaten, um zumindest für bestimmte Bilder Bildeinstellungsdaten anhand der Objektkoordinatendaten und der Rohclip-Parameter zu bestimmen, wobei die Bildeinstellungsdaten für jedes Bild, mit dem sie verknüpft sind, Daten umfassen, die einen minimalen Rahmen und einen maximalen Rahmen definieren, der das mindestens eine Rohclip-Objekt enthält, das durch die Rohclip-Parameter festgelegt ist, und
   e) Definieren von Rohclip-Daten als eine Folge von Bildern, die durch Zuweisen von Teilen der aufeinanderfolgenden Bilder gebildet werden, wobei diese Bildfolge durch Auswählen aus einer Vielzahl von Bildfolgen bestimmt wird, die in einem Rahmen enthalten sind, der größer als der minimale Rahmen und kleiner als der maximale Rahmen ist, assoziiert mit den aufeinanderfolgenden Bildern in den Bildeinstellungsdaten im Zusammenhang mit einem gegebenen Rohclip, wobei es sich um die Bildfolge handelt, die die Geschwindigkeit und die Ableitung der Beschleunigung einer virtuellen Kamera minimiert, die mit dieser Bildfolge assoziiert ist.

**Claims**

1. Video data processing device including a storage memory (4) receiving initial data defining a video shot, these data being processable for representing the video shot in the form of sequential image data, **characterized in that** it includes a detector (6), a framer (8) and a solver (10), wherein

   - the detector (6) is arranged for processing the sequential image data in order to detect in at least some images subject coordinate data from image data defining one or more rush subjects,
   - the framer (8) is arranged for processing the sequential image data in order to determine framing data, for at least some of the images, from rush parameters designating at least one rush subject and a rush format and from the subject coordinate data, the framing data including for each image associated therewith data defining a minimum frame and a maximum frame containing the at least one rush subject designated by the rush parameters, and
   - the solver (10) is arranged for producing rush data of the video shot from the sequential image data, framing data associated with the sequential images, and rush parameters, the rush data being selected from among a plurality of image sequences formed by associating portions of the sequential images that are contained in a frame larger than the minimum frame and smaller than the maximum frame associated with a given image for this rush, the solver being provided with a function that calculates, for a given image sequence, a plurality of values quantifying the movement of a virtual camera associated with the shot from this image sequence, **characterized in that** the solver is arranged for selecting, as an image sequence defining the rush data, the image sequence for which the plurality of associated values minimizes the speed and the derivative of the acceleration of the virtual camera that is associated therewith.

2. Device according to Claim 1, wherein the function with which the solver is provided further calculates a value quantifying the difference between the perceived displacement for each subject designated by rush parameters in the image sequence on the one hand and in the initial data on the other.

3. Device according to Claim 1 or 2, wherein the function with which the solver is provided further calculates a value quantifying the difference between the derivative of the displacement of each subject designated by the rush parameters in the initial data on the one hand, and the derivative of the displacement of the virtual camera on the other.

4. Device according to one of the preceding claims, wherein the function with which the solver is provided further calculates a value quantifying, for each image of the image sequence, the difference between the size of the minimum frame and that of the frame retained for this image in the image sequence, and the difference between the position of the centre of the minimum frame and that of the centre of the frame retained for this image in the image sequence.

5. Device according to one of the preceding claims, wherein the function with which the solver is provided further calculates a value quantifying, for each image of the image sequence, a value related to the inclusion or the exclusion of one or more subjects not designated in the rush parameters in the image sequence.

6. Device according to one of the preceding claims, wherein, for a given subject in a given image, the detector (6) analyses the sequential image data for detecting extreme lateral coordinates of this subject.

7. Device according to Claim 6, wherein, for a given image of a given rush, the framer (8) defines the minimum frame from the extreme lateral coordinates of each of the subjects designated in the rush parameters of this rush.

8. Device according to one of the preceding claims, wherein the framer (8) defines the maximum frame for corresponding to the dimensions of the images of the initial data.

9. Camera, **characterized in that** it includes a device according to one of the preceding claims, and **in that** it is arranged for taking a shot in the form of initial data, and for producing rush data from these data and the device according to one of the preceding claims.

10. Method of processing video data including the following operations:

    a) receiving initial data defining a video shot, these data being processable for representing the video shot in the form of sequential image data,
    b) determining rush parameters designating at least one rush subject and a rush format, and image data of one or more rush subjects,

c) analysing the sequential image data for detecting in at least some images coordinate data of a subject from image data defining one or more rush subjects,

d) processing the sequential image data for determining framing data for at least some of the images from the subject coordinate data and rush parameters, the framing data including for each image associated therewith data defining a minimum frame and a maximum frame containing the at least one rush subject designated by the rush parameters, and

e) defining rush data as an image sequence formed by associating portions of the sequential images, which image sequence is determined by selecting from among a plurality of image sequences that are contained in a frame larger than the minimum frame and smaller than the maximum frame associated with the sequential images in the framing data associated with a given rush the image sequence that minimizes the speed and the derivative of the acceleration of a virtual camera that is associated with this image sequence.

**Fig.1**

**Fig.2**

Fig.3

Fig.4

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 0540403 B1

**Littérature non-brevet citée dans la description**

• **KALAL Z. ; MIKOLAJCZYK K. ; MATAS J.** *Tracking-learning-detection. IEEE Transactions on Pattern Analysis and Machine Intelligence,* 2012, vol. 34, 7